# EUROPÄISCHE PATENTANMELDUNG

(11) **EP 2 592 052 A1**
(43) Veröffentlichungstag der Anmeldung: **15.05.2013**
(21) Anmeldenummer: 12192043.3
(22) Anmeldetag: 09.11.2012
(51) Int. Cl.: C02F 1/461, C25B 1/46, C02F 103/02

(54) **Anolyt, Verfahren zu dessen Herstellung und dessen Verwendung**

(30) Priorität: 09.11.2011 DE 102011055182
(71) Anmelder: Monopharm Beratungs- Und Handelsgesellschaft Mbh, 21444 Vierhöfen (DE)
(72) Erfinder: Waldemar Tim Kreiter, 21444 Vierhöfen (DE)
(74) Vertreter: von Puttkamer · Berngruber

(57) **Zusammenfassung**

Ein Anolyt weist einen Gehalt an oxidierenden Stoffen auf, welcher mindestens 1000 mg/l der Jodmenge entspricht, die bei der Jodometrie oxidierender Stoffe freigesetzt wird.

## Beschreibung

Die Erfindung bezieht sich auf einen Anolyt, ein Diaphragmalyse-Verfahren zu dessen Herstellung sowie dessen Verwendung.

Aus DE 10 2007 033 445 A1 ist ein derartiges Diaphragmalyse-Verfahren bereits bekannt. Durch den Zusatz des Alkali- oder Erdalkalisulfats oder Aluminiumsulfats, beispielsweise als Alaun, wird zwar ein Anolyt erhalten, der über Monate stabil ist, jedoch ist dessen oxidierende Wirkung gering.

Aufgabe der Erfindung ist es, einen Anolyt sowie ein Verfahren zu dessen Herstellung bereitzustellen, welcher bei hoher Langzeitstabilität eine hohe Oxidationswirkung aufweist.

Während die oxidierenden Stoffe, wie Chlor und hypochlorige Säure, in dem nach DE 10 2007 033 445 A1 hergestellten Anolyt bei der jodometrischen Titration lediglich etwa 500 mg/l Jod freisetzen, weist der erfindungsgemäße Anolyt einen Gehalt an oxidierenden Stoffen auf, welcher mindestens 1000 mg/l, insbesondere mehr als 1500 mg/l, also beispielsweise auch 1800 mg/l und mehr der Jodmenge entspricht, der bei der Jodometrie oxidierender Stoffe freigesetzt wird. Die Jodometrie, die ein Standardverfahren der quantitativen anorganischen Analyse darstellt, ist beispielsweise in "Praktikum der quantitativen anorganischen Analyse" von H. Lux, 3. Auflage, Verlag von J.F. Bergmann, 1959, Seiten 114 bis 119 beschrieben.

Das heißt, der erfindungsgemäße Anolyt weist eine oxidierende Wirkung auf, die doppelt bis nahezu viermal so groß ist wie nach dem Stand der Technik. Der erfindungsgemäße Anolyt mit dieser hohen oxidierenden Wirkung besitzt dabei eine hohe Lagerstabilität von einem Jahr und mehr.

Die oxidierende Wirkung eines Anolyt beruht insbesondere auf seinem Chlorgehalt, der einen entsprechenden Chlorgeruch hervorruft. Der erfindungsgemäße Anolyt weist jedoch trotz seiner hohen oxidierenden Wirkung einen kaum wahrnehmbaren Chlorgeruch auf.

Die Herstellung des erfindungsgemäßen Anolyt erfolgt vorzugsweise nach dem Diaphragmalyse-Verfahren, bei dem dem Anodenraum und dem Kathodenraum einer Elektrolysezelle, welche durch ein Diaphragma voneinander getrennt sind, ein wasserlösliches Alkalichlorid,ein wasserlösliches Salz eines Übergangsmetalls und ein Mittel zur Stabilisierung des Anolyt zugesetzt wird.

Als wässrige Alkalichloridlösung kann Kochsalz, also Natriumchlorid verwendet werden, aber beispielsweise auch ein Gemisch aus Natriumchlorid und Kaliumchlorid. Die Alkalichloridlösung wird vorzugsweise als gesättigte Lösung eingesetzt. Es kann jedoch auch eine verdünnte Lösung verwendet werden, beispielsweise kann der Alkalichloridgehalt einer um bis das 20-fache verdünnten gesättigten Lösung entsprechen.

Der zugeführten Alkalichloridlösung können 1 bis 100 g, insbesondere 10 bis 30 g des wasserlöslichen Salzes des Übergangmetalls pro Liter zugesetzt sein. Als Übergangsmetallsalz wird vorzugsweise ein wasserlösliches Zinksalz verwendet. Das Übergangsmetallsalz oder Zinksalz wird vorzugsweise als Sulfat oder Acetat oder als Salz einer anderen organischen Säure eingesetzt.

Das Stabilisierungsmittel ist vorzugsweise Alkali- und/oder Erdalkalisulfat und/oder Aluminiumsulfat. Die Menge des Alkali- und/oder Erdalkalisulfats oder Aluminiumsulfats kann 1 bis 50 g pro Liter Alkalichloridlösung betragen.

Das Alkalisulfat, das der zugeführten Alkalichloridlösung zugesetzt wird, kann beispielsweise Natriumsulfat und das Erdalkalisulfat beispielsweise Magnesiumsulfat sein, während das Aluminiumsulfat in Form eines Alauns, insbesondere Kaliumalaun, vorliegen kann.

Außer dem Alkali- und/oder Erdalkalisulfat und/oder Aluminiumsulfat können der der Elektrolysezelle zugeführten Alkali- und/oder Erdalkalichloridlösung zur Stabilisierung des Anolyt auch Alkali- und/oder Erdalkalinitrate, wie Magnesiumnitrat, oder Alkali- oder Erdalkalihydroxide, wie Magnesiumhyroxid, aber auch Perchlorsäure oder Kupfernitrat zugesetzt werden.

Der Anolyt kann einen pH-Wert von 1 bis 2 und ein Redoxpotential von über +1200 mV, insbesondere über +1500 mV, aufweisen. Der pH-Wert von 1 bis 2, also die hohe Azidität des Anolyt schränkt die Anwendungsmöglichkeiten ein. So ist er beispielsweise aufgrund der hohen Azidität und damit Aggressivität als Reinigungsmittel und zur Desinfektion von Gegenständen, z.B. Edelstahlrohren, ungeeignet, die bei einem pH-Wert von 2 und darunter angegriffen werden. Auch in der Human- und Tiermedizin sind eine Vielzahl von Anwendungsmöglichkeiten des Anolyt bei einer so hohen Azidität ausgeschlossen.

Vorzugsweise wird daher der im Kathodenraum der Elektrolysezelle gebildete Katholyt mit einem pH-Wert von 12 oder mehr zur Bildung eines Anolyts mit einem pH-Wert von mehr als 2 wenigstens ein weiteres Mal einer Elektrolysezelle zugeführt. Dabei kann es sich um die gleiche Elektrolysezelle handeln, in der der Katholyt zuvor gebildet worden ist oder um eine oder mehrere nacheinander geschaltete Elektrolysezellen, denen jeweils der Katholyt, der in der vorgeschalteten Elektrolysezelle gebildet worden ist, zugeführt wird.

Die Anzahl der Stufen dieses mehrstufigen Verfahrens hängt von dem gewünschten pH-Wert des am Ende gebildeten Anolyts ab.

Wahlweise kann dazu dem der Elektrolysezelle zugeführten Katholyt zuvor gebildeter Anolyt zugeführt werden.

Dabei wird vorzugsweise in jeder Stufe, also vor der Zufuhr des Anolyt zu der gleichen oder einer anderen Elektrolysezelle der Katholyt oder wahlweise das Gemisch aus Katholyt und Anolyt erneut mit einem wasserlöslichen Übergangsmetallsalz, insbesondere Zinksalz versetzt, und zwar vorzugsweise mit 1 bis 100 g, insbesondere 5 bis 50 g, ganz besonders bevorzugt, 10 bis 30 g Übergangsmetallsalz pro Liter Katholyt, der in der jeweiligen Elektrolysezelle gebildet worden ist bzw. das Gemisch aus Katholyt und Anolyt.

Mit der zwei- oder mehrstufigen Ausbildung des erfindungsgemäßen Verfahrens nach Anspruch 12 oder 13 kann damit der pH-Wert des Anolyt beliebig von pH2 bis pH7 eingestellt werden.

Damit wird ein stabiler Anolyt gebildet, der, wie für die meisten Anwendungen erforderlich, einen pH-Wert von mehr als pH2, insbesondere mehr als pH3, also nur schwach sauer, bis zu einem pH-Wert von pH8 oder pH8,5 aufweist, also bis neutral oder schwach alkalisch eingestellt ist. Durch den höheren pH-Wert erfolgt ein anderer zeitlicher Ablauf des Chlorgleichgewichts in der Lösung. Das Hypochlorit wird verzögert abgebaut und die unerwünschte Chlorat-Bildung verzögert.

Bei Verwendung auf der Haut, z.B. zur hygienischen Handwaschung oder Handdesinfektion sowie in der Human- oder Tiermedizin weist der Anolyt einen pH-Wert von vorzugsweise 6,5 bis 8,5 auf.

Aufgrund des pH-Werts von mehr als 2, insbesondere mehr als 3 seiner Stabilität über einen langen Zeitraum und des kaum wahrnehmbaren Chlorgeruchs, kann der Anolyt in der Kosmetik und in der Human- und Tiermedizin eingesetzt werden. So kann er beispielsweise zur Behandlung von Schimmel und Pilzbefall auf der Haut verwendet werden. Eine weitere Anwendungsmöglichkeit des auf über pH2, insbesondere über pH3 eingestellten Anolyt ist beispielsweise die Verwendung als Spray gegen Juckreiz und Insektenstiche. Auch ist die Verwendung in der Fußpilzprophylaxe beispielsweise im Sport und im Wellness-Bereich möglich. Auch können medizinische Fußbäder mit dem erfindungsgemäßen, auf eine pH-Wert von mehr als 2, insbesondere mehr als 3 eingestellten Anolyt hergestellt werden, ebenso Ganzkörperbäder, beispielsweise mit anschließender Rückfettung und Säureschutz durch den Anolyt.

Neben der Desinfektion kann der erfindungsgemäße Anolyt als Trägermedium für Medikamente und weitere Wirkstoffe eingesetzt werden. Die Medikamente oder Wirkstoffe können je nach Rezeptur und Beschaffenheit vor oder nach der Elektrolyse beigegeben werden. Die Zugabe vor der Elektrolyse hat den Vorteil, dass danach keine weiteren Produktionsschritte notwendig sind. So kann beispielsweise die Alkali- und/oder Erdalkalichloridlösung, die der oder einer der Elektrolysezellen zugeführt wird, mit Fluorid versetzt werden, beispielsweise bei der Herstellung von Mundwasser.

Das erfindungsgemäße Diaphragmalyse-Verfahren kann auch zur Trinkwasseraufbereitung eingesetzt werden. Der Anolyt kann dann so eingestellt werden, dass bei der Desinfektion gezielt zusätzliche Stoffe wie beispielsweise Fluorid oder Kohlendioxid in die der Elektrolysezelle zugeführte Alkali- oder Erdalkalilösung eingebracht werden.

Der erfindungsgemäße Anolyt ist insbesondere in der Human- und Tiermedizin verwendbar.

Dabei kann er in folgenden Darreichungsformen für folgende Krankheiten verwendet werden, die am Körper außen auftreten:
Als Gesamtkörperbad oder Teilbad bei Neurodermitis, allergischem Juckreiz, Ekzemen, Wunden, insbesondere großen Wunden.

Als Fußbad bei diabetischen Füßen, Entzündungen und Wunden durch Venenleiden sowie Pilzerkrankungen.

Als Creme, Gel, Spray oder mit einem Pflaster bei Wunden, insbesondere Brandwunden Infektionen, gereizter Haut, allergischen Reaktionen oder Insektenstichen,.

Bei Krankheiten der Verdauungsorgane (Magen, Darm) sowie der Blase kann der erfindungsgemäße Anolyt in folgenden Darreichungsformen eingesetzt werden: Als Tropfen, Tinktur oder Kapseln, insbesondere Kolloidkapseln bei Infektionen, Entzündungen, zur Entgiftung und zur pH-Regulierung. Bei Krankheiten der Genitalien kann der erfindungsgemäße Anolyt in folgenden Darreichungsformen verwendet werden: Als Spray, Gel oder Salbe bei Infektionen, Entzündungen, Wunden, Pilzerkrankungen und zur pH-Stabilisierung.

Bei folgenden Krankheiten der Mundhöhle, des Rachens und der Nase kann der erfindungsgemäße Anolyt in folgenden Darreichungsformen eingesetzt werden: Als Spray, Tinktur oder Mundwasser bei Allergien, Infektionen, Pilzerkrankungen und Entzündungen.

Bei Krankheiten des äußeren Gehörgangs kann der erfindungsgemäße Anolyt beispielsweise bei Entzündungen, Infektionen oder Pilzerkrankungen in der Darreichungsform eines Sprays, Gels oder von Tropfen verwendet werden.

Bei Krankheiten der Augen kann der erfindungsgemäße Anolyt in der Darreichungsform eines Sprays oder von Tropfen bei Allergien, Infektionen, Entzündungen oder Trockenheit verwendet werden.

Bei im Gesicht auftretenden Krankheiten kann der erfindungsgemäße Anolyt als Gel, Salbe oder Spray bei Entzündungen, Infektionen, Unreinheiten, Alterung, Faltenbildung und Herpes eingesetzt werden, bei einer Herpeserkrankung der Lippen vorzugsweise als Gel.

Bei Erkrankungen der Zähne oder des Zahnfleischs kann der erfindungsgemäße Anolyt in der Darreichungsform eines flüssigen Präparats bei Entzündungen, Infektionen, Operationswunden, Parodontose, Parodontitis und Pilzerkrankungen sowie zur Zahnreinigung und Zungenreinigung verwendet werden.

Bei Krankheiten der Atemwege, insbesondere des Bronchialsystems, kann der erfindungsgemäße Anolyt als Spray, insbesondere Ultraschallspray, oder in einem Inhalator bei Infektionen, Entzündungen und Pilzerkrankungen verwendet werden.

Bei Entzündungen im oberflächennahen Bereich des Körpers z.B. am Knie, den Füßen, Beinen, Hüften, Händen oder Armen kann der erfindungsgemäße Anolyt in Form einer Injektionslösung parenteral eingebracht werden, beispielsweise bei Entzündungen oder Sportverletzungen.

Der erfindungsgemäße Anolyt ist vor allem auch zur Tumorbehandlung, insbesondere auch zur Behandlung maligner Tumore verwendbar. Dabei kann der Anolyt in Form einer Injektionslösung direkt in den vom Tumor befallenen Bereich parenteral eingebracht werden, beispielsweise mit einer computergesteuerten Spritze.

Bei einem Bronchialkarzinom kann der Anolyt beispielsweise als Aerosol durch Inhalieren zugeführt werden.

Bei einem Nierentumor kann der erfindungsgemäße Anolyt beispielsweise als Trinklösung oder in Form eines Saftes verabreicht werden.

Insbesondere bei der Behandlung von Wunden kann dabei die Einstellbarkeit des pH-Werts des erfindungsgemäßen Anolyt zwischen einem pH-Wert von 2 bis 8 genutzt werden.

Auch bei der Desinfektion kommt dem erfindungsgemäßen Anolyt nicht nur seine hohe oxidierende Wirkung sondern auch die Möglichkeit der Einstellbarkeit des pH-Wertes im Bereich von pH1 bis pH8 zugute. Dadurch kann nämlich für die Mikroorganismen, die durch die Desinfektion entfernt werden sollen, ein pH-Wert eingestellt werden, bei dem das Wachstum der Mikroorganismen optimal gehemmt wird.

Der erfindungsgemäße Anolyt ist insbesondere zur Desinfektion von Flüssigkeiten, Räumen und Oberflächen verwendbar.

Flüssigkeiten, die mit dem erfindungsgemäßen Anolyt desinfiziert werden können, sind beispielsweise Wasser, insbesondere Trinkwasser (Mensch, Tier), Schmutzwasser, Brauchwasser, Kühlwasser, Beregnungswasser, Ballastwasser sowie das für Aquafarming und Fischzucht verwendete Wasser.

Die Desinfektion von Räumen kann mit einem Aerosol, einem Ultraschallzerstäuber oder durch Einbringung des erfindungsgemäßen Anolyt in eine Klimaanlage erfolgen, wobei neben der Entkeimung gleichzeitig eine Geruchsbeseitigung erfolgt. Räume, bei denen der erfindungsgemäße Anolyt zur Desinfektion eingesetzt werden kann, sind beispielsweise Aufenthaltungsräume, Wartezimmer, Praxen, Krankenzimmer, Operationsräume, Schulen, Kindergärten, Kinderzimmer, zur Tiermast oder Tierzucht verwendete Räume, Räume in Gärtnereien, Fabriken, der Lebensmittelindustrie oder im Einzelhandel, Schalterhallen, Bibliotheken, Wellness-Räume, Schwimmbäder und Privaträume. Oberflächen, die mit dem erfindungsgemäßen Anolyt desinfiziert werden können, sind z.B. Oberflächen von Industriearbeitsplätzen, in der Gastronomie, in Hotels, in Kliniken und Praxen, Schulen, sowie in der Tierzucht und im Tierhandel.

Falls bei der Herstellung des Anolyts der zugeführten Alkalichloridlösung als Übergangsmetallsalz Zinksalz zugesetzt wird, kommt zudem dessen heilende Wirkung zum Tragen, wenn der Anolyt in der Human- und Tiermedizin verwendet wird.

Ferner ist darauf hinzuweisen, dass sich der erfindungsgemäße Anolyt hervorragend zur hygienischen Händewaschung und Handdesinfektion eignet. So erfüllt er sowohl die DIN-Norm 1499 für die hygienische Händewaschung wie die DIN-Norm 1500 für die Handdesinfektion, und zwar jeweils ohne jeglichen Alkoholzusatz.

Zudem ist der erfindungsgemäße Anolyt hervorragend zur Flächendesinfektion geeignet.

## Patentansprüche

1. Anolyt, **dadurch gekennzeichnet, dass** er einen Gehalt an oxidierenden Stoffen aufweist, welcher mindestens 1000 mg pro Liter der Jodmenge entspricht, die bei der Jodometrie oxidierender Stoffe freigesetzt wird.

2. Anolyt nach Anspruch 1, **dadurch gekennzeichnet, dass** der Gehalt an oxidierenden Stoffen mehr als 1500 mg pro Liter der bei der Jodometrie oxidierender Stoffe freigesetzten Jodmenge entspricht.

3. Anolyt nach Anspruch 1 oder 2, **dadurch gekennzeichnet, dass** der Anolyt durch Diaphragmalyse einer Alkali- und/oder Erdalkalichlorid-haltigen Lösung gebildet wird.

4. Anolyt nach einem der vorstehenden Ansprüche, **dadurch gekennzeichnet, dass** er einen im Bereich von pH1 bis pH8 einstellbaren pH-Wert aufweist.

5. Diaphragmalyse-Verfahren zur Herstellung des Anolyt nach einem der vorstehenden Ansprüche, bei dem dem Anodenraum und dem Kathodenraum einer Elektrolysezelle, welche durch ein Diaphragma voneinander getrennt sind, jeweils eine Alkalichloridlösung zugeführt wird, welcher ein Mittel zur Stabilisierung des Anolyt zugesetzt ist, **dadurch gekennzeichnet, dass** der zugeführten Alkalichloridlösung ein Salz eines Übergangsmetalls zugesetzt wird.

6. Verfahren nach Anspruch 5, **dadurch gekennzeichnet, dass** der zugeführten Alkalichloridlösung 1 bis 10 g des Übergangsmetallsalzes pro Liter zugesetzt werden.

7. Verfahren nach Anspruch 5 oder 6, **dadurch gekennzeichnet, dass** das Übergangsmetallsalz ein Zinksalz ist.

8. Verfahren nach einem der Ansprüche 5 bis 7, **dadurch gekennzeichnet, dass** das Salz des Übergangsmetalls ein Sulfat oder das Salz einer organischen Säure ist.

9. Verfahren nach Anspruch 5, **dadurch gekennzeichnet, dass** das Mittel zur Stabilisierung des Anolyt ein Alkali- und/oder Erdalkalisulfat und/oder Aluminiumsulfat ist.

10. Verfahren nach Anspruch 9, **dadurch gekennzeichnet, dass** das Alkalisulfat Natriumsulfat, das Erdalkalisulfat Magnesiumsulfat und das Aluminiumsulfat Alaun ist.

11. Verfahren nach Anspruch 9 oder 10, **dadurch gekennzeichnet, dass** die der Alkalichloridlösung zugesetzte Menge des Alkali- und/oder Erdalkalisulfats und/oder Aluminiumsulfats insgesamt 1 bis 50 g pro Liter Alkalichloridlösung beträgt.

12. Verfahren nach einem der Ansprüche 5 bis 11, **dadurch gekennzeichnet, dass** der im Kathodenraum der Elektrolysezelle gebildete Katholyt zur Bildung eines Anolyts mit einem pH-Wert von mehr als pH2 wenigstens ein Mal der gleichen oder einer anderen Elektrolysezelle zugeführt wird.

13. Verfahren nach Anspruch 12, **dadurch gekennzeichnet, dass** dem Katholyt vor seiner Zufuhr zu dem gleichen oder einer anderen Elektrolysezelle ein Salz eines Übergangsmetalls gemäß einem der Ansprüche 5 bis 8 zugeführt wird.

14. Verwendung des Anolyts nach einem der Ansprüche 1 bis 4 zur Desinfektion.

15. Verwendung des Anolyts nach einem der Ansprüche 1 bis 4 zur Reinigung.

16. Verwendung des Anolyts nach einem der Ansprüche 1 bis 4 in der Human- und Tiermedizin.
